Europäisches Patentamt

European Patent Office

Office européen des brevets

(19)

(11) **EP 0 591 794 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int Cl.$^6$: **H04N 5/44**

(21) Anmeldenummer: **93115504.8**

(22) Anmeldetag: **25.09.1993**

(54) **Verfahren und Vorrichtung zur Bildwechselfrequenz-Verdoppelung**

Method and device for doubling the field rate

Méthode et appareil pour doubler la fréquence de trame

(84) Benannte Vertragsstaaten:
**DE ES FR GB IT**

(30) Priorität: **05.10.1992 DE 4233354**

(43) Veröffentlichungstag der Anmeldung:
**13.04.1994 Patentblatt 1994/15**

(73) Patentinhaber: **DEUTSCHE THOMSON-BRANDT GMBH**
**78048 Villingen-Schwenningen (DE)**

(72) Erfinder:
- **Correa, Carlos**
  **D-78056 Villingen-Schwenningen (DE)**
- **Stolte, John**
  **D-78052 Villingen-Schwenningen (DE)**

(74) Vertreter: **Hartnack, Wolfgang, Dipl.-Ing.**
**Deutsche Thomson-Brandt GmbH**
**Licensing & Intellectual Property,**
**Göttinger Chaussee 76**
**30453 Hannover (DE)**

(56) Entgegenhaltungen:
**EP-A- 0 201 245        EP-A- 0 474 287**
**EP-A- 0 477 823**

- **IMAGE TECHNOLOGY (JOURNAL OF THE BKSTS) SUPPL. - CINEMA TECHNOLOGY , 4 (1990) OCT., NO 1 Bd. 72, Nr. 11, November 1990, LONDON, GB Seiten 430 - 433 ACKROYD ET AL 'Interpolating Interlaced Television Pictures'**
- **IEEE TRANSACTIONS ON CONSUMER ELECTRONICS Bd. 37, Nr. 3, August 1991, NEW YORK, US Seiten 296 - 302 OEISTAEMOE ET AL 'A motion insensitive method for scan rate conversion and cross error cancellation'**

**Beschreibung**

Die Erfindung betrifft ein Verfahren und eine Vorrichtung zur Bildwechselfrequenz-Verdoppelung.

Zur Bildwechselfrequenz-Verdoppelung in Fernsehgeräten wird üblicherweise jedes Halbbild zweimal wiederholt (AABB) oder es wird jeweils das zweite wiedergegebene Halbbild aus dem ersten übertragenen und das dritte wiedergegebene aus dem zweiten übertragenen interpoliert und das vierte wiedergegebene als das zweite übertragene wiederholt (AA'B'B). Dabei treten aber Störungen durch Zeilenflimmern oder Bewegungsartefakte auf.

In DE-A-4220662 (vor dem Prioritätstag der vorliegenden Anmeldung angemeldet, aber nach deren Anmeldetag veröffentlicht) wird eine Bildwechselfrequenz-Verdoppelung mit einer symmetrischen Doppel-Medianfilterung erreicht. Mit einem vertikal-temporalen Median-Filter werden zunächst Bildpunkte von Zeilen zwischen den Zeilen der Eingangs-Halbbilder berechnet. Aus diesen progressiven, interpolierten Halbbildern mit z.B. 50 Hz Bildwechselfrequenz werden mit Hilfe einer temporalen Mittelwertbildung progressive Halbbilder mit doppelter Bildwechselfrequenz generiert. Werden diese aber mit einem künstlichen Interlace wiedergegeben, können 25Hz-Störungen entstehen, weil jeweils zwei aufeinanderfolgende 100Hz-Halbbilder nur aus nichtinterpolierten Bildpunkten bestehen.

Der Erfindung liegt die Aufgabe zugrunde, ein verbessertes Verfahren zur Bildwechselfrequenz-Verdoppelung mit Interlace-Ausgangsbildern anzugeben. Diese Aufgabe wird durch das in Anspruch 1 angegebene Verfahren gelöst.

Falls das Quellsignal im Interlace vorliegt, wird es zunächst in ein progressives Quellsignal umgewandelt. Dies geschieht vorteilhaft wie in DE-A-4211955 (EP-A-0 564 957, stand der Technik gemäß Artikel 54(3) EPÜ) beschrieben oder mit anderen, bekannten Interlace-Progressiv-Umwandlungsverfahren.

In DE-A-4211955 werden die zu ermitteln den Bildpunkte (INT) der progressiven Eingangs-Bilder (INP+INT) mit Hilfe einer ersten, zeitlichen Medianfilterung und einer zweiten, vertikalen Medianfilterung gewonnen, wobei für die erste Medianfilterung zu dem jeweiligen Bildpunkt $(P_{2i})$ zeitlich benachbarte Interlace-Bildpunkte gleicher räumlicher Lage und ein Mittelwert aus zu dem jeweiligen Bildpunkt vertikal benachbarten Interlace-Bildpunkten $(P_1, P_3)$ verwendet werden und für die zweite Medianfilterung diese vertikal benachbarten Interlace-Bildpunkte und das Ausgangssignal der ersten Medianfilterung verwendet werden. Anschließend werden durch ein vertikales $1/2$line-shuffling ($1/2$Zeilen-Verschiebung) mittels einer vertikalen Interpolation zwischen den 'progressiven' Bildpunkten liegende, interpolierte Bildpunkte generiert. Diese vertikale Interpolation ist im einfachsten Fall eine vertikale Mittelung von Bildpunkten. Die interpolierten Bildpunkte (Format 50Hz, 1:1) werden zwischengespeichert und mit doppelter Bildwechselfrequenz wieder ausgelesen, wobei jede zweite Zeile der gespeicherten, interpolierten Bildpunkte temporal um 10ms verzögert ausgegeben wird. Dadurch entstehen Halbbilder im Format 100Hz, 2:1. In allen Halbbildern dieses Ausgangssignals werden daher interpolierte Bildpunkte verwendet, womit die obengenannten 12.5Hz-Störungen vermieden werden. Die erforderliche vertikale Verschiebung um eine halbe Zeile wird subjektiv nicht störend wahrgenommen.

Zusätzlich können die interpolierten Bildpunkte vor der 100Hz-Ausgabe einem vertikalen Peaking (Anhebung von höheren Frequenzen) unterzogen werden, um eine subjektiv verbesserte vertikale Schärfe zu erzeugen. Vorteilhaft werden durch die doppelte, symmetrische Filterung die oben beschriebenen Artefakte weitgehend unterdrückt.

Im Prinzip besteht das erfindungsgemäße Verfahren darin, daß zur Bildwechselfrequenz-Verdoppelung mit progressiven Eingangs-Bildern und Interlace-Ausgangs-Halbbildern:

- jeweils aus einer Gruppe von vertikal übereinanderliegenden Bildpunkten des aktuellen progressiven Eingangs-Bildes ein vertikal zwischen den Eingangszeilen liegender Bildpunkt interpoliert wird;
- die interpolierten Bildpunkte jeder zweiten so gebildeten Zeile ein erstes Ausgangs-Halbbild ergeben;
- die interpolierten Bildpunkte der jeweils anderen so gebildeten Zeilen um einen der Halbbilddauer der Interlace-Ausgangs-Halbbilder entsprechenden Betrag zeitlich verzögert ausgegeben werden und so ein zweites Ausgangs-Halbbild ergeben.

Vorteilhafte Weiterbildungen des erfindungsgemäßen Verfahrens ergeben sich aus den zugehörigen abhängigen Ansprüchen.

Der Erfindung liegt die weitere Aufgabe zugrunde, eine Vorrichtung für das erfindungsgemäße Verfahren anzugeben. Diese Aufgabe wird durch die in Anspruch 4 angegebene Vorrichtung gelöst.

Im Prinzip ist die erfindungsgemäße Vorrichtung versehen mit - einer Zeilenverzögerung, deren Ausgangssignale in einem nachfolgenden Addierer mit deren Eingangssignalen, bestehend aus Bildpunkt-Werten von progressiven Bildern, kombiniert werden;

- einem dem Addierer nachgeschalteten Dividierer, der Bildpunkt-Werte halbiert und jeweils den Mittelwert von zwei vertikal benachbarten Bildpunkten des aktuellen progressiven Eingangs-Bildes als vertikal zwischen den Eingangszeilen liegende Bildpunkte bildet, der vertikal um eine halbe Zeile verschoben ist;
- dem Dividierer nachgeschalteten Halbbild-Speichermitteln zur Speicherung der Bildpunkt-Mittelwerte, die unter der Kontrolle einer Steuerschaltung die zwischengespeicherten Bildpunkt-Mittelwerte im Interlace-Format mit verdoppelter Bildwechselfrequenz auslesen, indem jede zweite Zeile um einen der Hälbbilddauer der Interlace-Ausgangs-Halbbilder entsprechenden Beitragzeitlich verzögert ausgegeben wird.

Vorteilhafte Weiterbildungen der erfindungsgemäßen Vorrichtung ergeben sich aus dem zugehörigen abhängigen Anspruch.

Anhand der Zeichnungen sind Ausführungsbeispiele der Erfindung beschrieben. Die Zeichnungen zeigen in:

Fig. 1     Interpolations-Schema;
Fig. 2     vereinfachtes Blockschaltbild für das erfindungsgemäße Verfahren;
Fig. 3     Blockschaltbild einer erfindungsgemäßen Vorrichtung zur Bildwechselfrequenz-Verdoppelung.

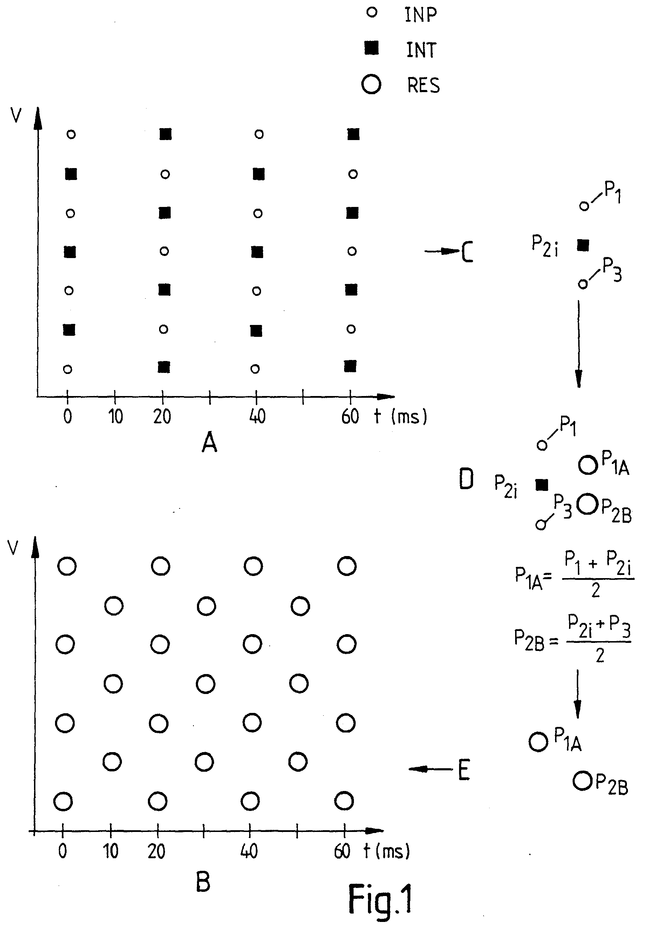

In dem vertikal-temporalen Abtastraster in Fig. 1A sind die Eingangs-Bildpunkte INP mit einem zeitlichen Abstand von 20ms (50Hz) und für die Eingangs-Halbbilder interpolierte Bildpunkte INT dargestellt. Es ergeben sich Bilder im Format 50Hz, 1:1. In Fig. 1B sind entsprechend die aus der erfindungsgemäßen Bildwechselfrequenz-Verdoppelung resultierenden Ausgangs-Bildpunkte RES mit einem zeitlichen Abstand von 10ms (100Hz) dargestellt.
In Fig. 1C ist ein aus den vertikal übereinanderliegenden Bildpunkten $P_1$ und $P_2$ ermittelter Bildpunkt $P_{2i}$ dargestellt. Die Bildpunkte $P_1$, $P_{2i}$ und $P_3$ führen zu dem progressiven 50Hz-Bild.
In Fig. 1D sind die zu interpolierenden Bildpunkte $P_{1A}$ und $P_{2B}$ dargestellt:

$$P_{1A} = (P_1 + P_{2i})/2;$$

$$P_{2B} = (P_{2i} + P_3)/2.$$

In Fig. 1E sind die in Fig. 1D interpolierten Bildpunkte entsprechend dem Format 100Hz, 2:1 angeordnet.

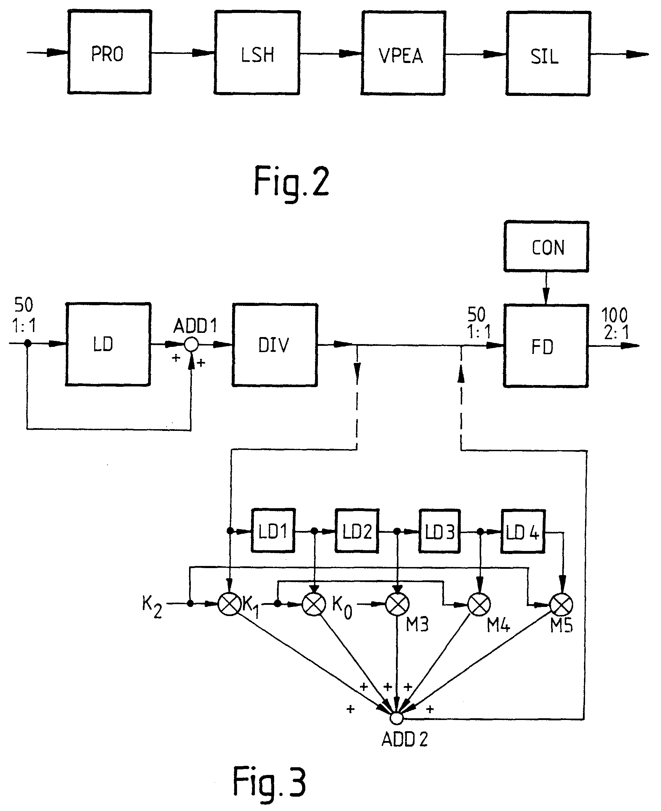

In Fig. 2 werden 50Hz-Interlace-Eingangsbilder in einem Interlace-Progressiv-Konverter PRO in das Format 50Hz, 1:1 gewandelt. In einem nachfolgenden Line-Shuffler LSH werden die zwischen den Eingangs-Zeilen liegenden interpolierten Bildpunkte durch eine vertikale Mittelwertbildung oder durch ein vertikales FIR-Filter ermittelt. Anschließend kann ein vertikales Peaking in einer Peaking-Schaltung VPEA mittels eines vertikalen FIR-Filters durchgeführt werden. Zum Schluß erfolgt in Schaltung SIL ein synthetisches Interlace. Die Ausgangssignale haben das Format 100Hz, 2:1.
Die Eingangs-Bildpunktwerte im Format 50Hz, 1:1 werden in Fig. 3 einer ersten Zeilenverzögerung LD und einem ersten Addierer ADD1 zugeführt, in dem das Ausgangssignal von LD mit dem Eingangssignal kombiniert wird. Der Ausgang von ADD1 ist mit dem Eingang eines Dividierers DIV verbunden, der eine Teilung durch zwei, z.B. durch eine Shift-Operation, herbeiführt. Die Ausgangssignale von DIV werden einem Halbbildspeicher FD zugeführt, der von einer Steuerschaltung CON kontrolliert wird. Die Steuerschaltung bewirkt, daß jeweils die Zeilen 1, 2, ..., n im Format 50Hz, 1:1 in FD aufeinanderfolgend eingelesen werden und die Zeilen 1, 3, ..., n-1 und 2, 4, ..., n aufeinanderfolgend im Format 100Hz, 2:1 ausgelesen werden. Ab der neuen Zeile 2 wird erst eingelesen, nachdem jeweils die alte Zeile 2 ausgegeben wurde. Optional kann zwischen DIV und FD ein Peaking-Filter mit z.B. 5 Koeffizienten ($k_2$, $k_1$, $k_0$, $k_1$, $k_2$) eingefügt werden. Der Ausgang von DIV wird seriell vier Zeilenverzögerungen LD1, LD2, LD3 und LD4 zugeführt. Die Ausgänge dieser Zeilenverzögerungen und der Eingang von LD1 werden jeweils in einem entsprechenden Multiplizierer M1-M5 mit dem jeweiligen der Koeffizienten gewichtet. Die Ausgangssignale dieser Multiplizierer werden in einem zweiten Addierer ADD2 addiert und dem Halbbildspeicher FD zugeführt.
Die Zeilenzahl der Bilder kann z.B. 525, 625, 1050, 1125 oder 1250 sein, wobei die Speicherzeit des Halbbildspeichers FD entsprechend angepaßt wird.
Die Erfindung kann ebenso für Eingangs-Bildwechselfrequenzen von 59.94Hz oder 60Hz angewendet werden.

**Patentansprüche**

1.  Verfahren zur Bildwechselfrequenz-Verdoppelung mit progressiven Eingangs-Bildern und Interlace-Ausgangs-Halbbilden, **dadurch gekennzeichnet**, daß:

    -   jeweils aus einer Gruppe von vertikal übereinanderliegenden Bildpunkten ($P_1$, $P_{2i}$ bzw. $P_{2i}$, $P_3$) des aktuellen progressiven Eingangs-Bildes ein vertikal zwischen den Eingangszeilen liegender Bildpunkt ($P_{1A}$ bzw. $P_{2B}$) interpoliert (LSH) wird;
    -   die interpolierten Bildpunkte ($P_{1A}$) jeder zweiten so gebildeten Zeile ein erstes Ausgangs-Halbbild ergeben;
    -   die interpolierten Bildpunkte ($P_{2B}$) der jeweils anderen so gebildeten Zeilen um einen der Halbbilddauer der Interlace-Ausgangs-Halbbilder entsprechenden Betrag zeitlich verzögert (SIL) ausgegeben werden und so ein zweites Ausgangs-Halbbild ergeben.

2.  Verfahren nach Anspruch 1, **dadurch gekennzeichnet**, daß im Fall von Interlace-Quellsignalen (INP) die zu ermitteInden Bildpunkte (INT) der progressiven Eingangs-Bilder (INP+INT) mit Hilfe einer ersten, zeitlichen Medianfilterung und einer zweiten, vertikalen Medianfilterung gewonnen werden, wobei für die erste Medianfilterung zu dem jeweiligen Bildpunkt ($P_{2i}$) zeitlich benachbarte Interlace-Bildpunkte gleicher räumlicher Lage und ein Mittelwert aus zu dem jeweiligen Bildpunkt vertikal benachbarten Interlace-Bildpunkten ($P_1$, $P_3$) verwendet werden und für die zweite Medianfilterung diese vertikal benachbarten Interlace-Bildpunkte und das Ausgangssignal der ersten Medianfilterung verwendet werden.

3. Verfahren nach Anspruch 1 oder 2, **dadurch gekennzeichnet**, daß die interpolierten Bildpunkte ($P_{1A}$, $P_{2B}$) vor der Ausgabe (SIL) mit einem vertikalen Peakingfilter (VPEA) gefiltert werden.

4. Vorrichtung für ein Verfahren nach einem oder mehreren der Ansprüche 1 bis 3, versehen mit:

   - einer Zeilenverzögerung (LD), deren Ausgangssignale in einem nachfolgenden Addierer (ADD1) mit deren Eingangssignalen, bestehend aus Bildpunkt-Werten von progressiven Bildern, kombiniert werden;
   - einem dem Addierer nachgeschalteten Dividierer (DIV), der Bildpunkt-Werte halbiert und jeweils den Mittelwert von zwei vertikal benachbarten Bildpunkten ($P_1$, $P_{2i}$ bzw. $P_{2i}$, $P_3$) des aktuellen progressiven Eingangs-Bildes als vertikal zwischen den Eingangszeilen liegende Bildpunkte ($P_{1A}$ bzw. $P_{2B}$) bildet, der vertikal um eine halbe Zeile verschoben ist;
   - dem Dividierer nachgeschalteten Halbbild-Speichermitteln (FD) zur Speicherung der Bildpunkt-Mittelwerte, die unter der Kontrolle einer Steuerschaltung (CON) die zwischengespeicherten Bildpunkt-Mittelwerte im Interlace-Format mit verdoppelter Bildwechselfrequenz auslesen, indem jede zweite Zeile um einen der Halbbilddauer der Interlace-Ausgangs-Halbbilder entsprechenden Beitrag zeitlich verzögert ausgegeben wird.

5. Vorrichtung nach Anspruch 4, **dadurch gekennzeichnet**, daß die Bildpunkt-Mittelwerte zwischen dem Dividierer (DIV) und den Halbbild-Speichermitteln (FD) ein vertikales Peaking-Filter (VPEA) durchlaufen.

## Claims

1. Method of doubling the frame repetition rate using progressive input frames and interlaced output fields, characterised in that:

   - from each group of picture elements ($P_1$, $P_{2i}$, or $P_{2i}$, $P_3$) of the instantaneous progressive input frame that lie vertically above one another, a picture element ($P_{1A}$ or $P_{2B}$) lying vertically between the input lines is interpolated (LSH);
   - the interpolated picture elements ($P_{1A}$) of each second so-formed line produce a first output field;
   - the interpolated picture elements ($P_{2B}$) of the respective other so-formed lines are emitted delayed in time (STL) by an amount corresponding to the duration of the field of the interlaced output fields and thus produce a second output field.

2. Method in accordance with Claim 1, characterised in that, in the event of interlaced source signals (INP), the picture elements (INT) of the progressive input frames (INP + INT) which are to be determined are obtained with the aid of a first temporal median filtering and a second vertical median filtering whereby, interlaced picture elements having the same spatial position that are adjacent in time to the instantaneous picture element ($P_{2i}$) and an average value from the interlaced picture elements ($P_1$, $P_3$) that are vertically adjacent to the instantaneous picture element are used for the first median filtering and these vertically adjacent interlaced picture elements and the output signal of the first median filtering are used for the second median filtering.

3. Method in accordance with Claim 1 or 2, characterised in that, the interpolated picture elements ($P_{1A}$ or $P_{2B}$) are filtered with a vertical peaking filter (VPEA) before the emission (SIL).

4. Device for a method in accordance with one or more of the Claims 1 to 3, provided with:

   - a line delay means (LD) whose output signals are combined in a following adder (ADD1) with their input signals that consist of picture element values of progressive frames;
   - a divider (DIV) connected subsequently of the adder which halves picture element values and on each occasion forms the average value of two vertically adjacent picture elements ($P_1$, $P_{2i}$, or $P_{2i}$, $P_3$) of the instantaneous progressive input frame as picture elements ($P_{1A}$ or $P_{2B}$) lying vertically between the input lines, which average value is displaced vertically by half a line;
   - field store means (FD) connected subsequently of the divider for storing the picture element average values which reads out the buffer-stored picture element average values in the interlaced format at double the frame repetition rate under the control of a control circuit (CON), in that every second line is emitted delayed in time by an amount corresponding to the field duration of the interlaced output field.

7  EP 0 591 794 B1  8

**5.** Device in accordance with Claim 4, characterised in that, the picture element average values pass through a vertical peaking filter (VPEA) between the divider (DIV) and the field store means (FD).

## Revendications

**1.** Procédé pour doubler la fréquence de trame avec des images d'entrée progressives et des demi-images de sortie à interlignage, caractérisé en ce que :

- à partir d'un groupe de points-image ( respectivement $P_1$, $P_{2i}$ et $P_{2i}$, $P_3$) verticalement superposés de l'image d'entrée progressive actuelle, un point-image (respectivement $P_{1A}$ et $P_{2B}$) se trouvant à la verticale entre les lignes d'entrée est chaque fois interpolé (LSH);
- les points-image interpolés ($P_{1A}$) de chaque seconde ligne ainsi formée produisent une première demi-image de sortie;
- les points-image interpolés ($P_{2B}$) de chacune des autres lignes ainsi formées sortent (SIL) avec un retard temporel correspondant à la durée de demi-image de la demi-image de sortie à interlignage et produisent ainsi une seconde demi-image de sortie.

**2.** Procédé selon la revendication 1,caractérisé en ce que, dans le cas de signaux-sources à interlignage (INP), les points-image à déterminer (INT) des images d'entrée progressive (INP + INT) sont obtenus avec l'aide d'une première filtration temporelle médiane et d'une seconde filtration verticale médiane, en utilisant pour la première filtration médiane, en chaque point-image ($P_{2i}$), des points-image d'interlignage temporellement voisins et de position spatiale identique ainsi qu'une valeur moyenne extraite en chaque point-image des points-image d'interlignage voisins ($P_1$, $P_3$) et, pour la seconde filtration médiane, ces points-image d'interlignage verticalement voisins ainsi que le signal de sortie de la première filtration médiane.

**3.** Procédé selon la revendication 1 ou 2, caractérisé en ce que les points-image interpolés ($P_{1A}$, $P_{2B}$) sont filtrés avant la sortie (SIL) avec un filtre (VPEA) d'alignement de crête vertical.

**4.** Dispositif pour la mise en oeuvre du procédé selon une ou plusieurs des revendications 1 à 3, comportant :

- une élément de temporisation de ligne (LD), dont les signaux de sortie sont combinés, dans un additionneur (ADD1) placé en aval, avec les signaux d'entrée de l'élément de temporisation, ceux-ci consistant en valeurs de points-image d'images progressives;
- un diviseur (DIV) placé en aval de l'additionneur, qui divise par deux les valeurs de points-image et forme chaque fois la valeur moyenne de deux points-image verticalement voisins (respectivement $P_1$, $P_{2i}$ et $P_{2i}$, $P_3$) de l'image d'entrée progressive actuelle comme points-image (respectivement $P_{1A}$ et $P_{2B}$) se trouvant à la verticale entre deux lignes d'entrée, ladite valeur moyenne étant décalée verticalement d'une demi-ligne.
- des moyens de mémorisation de la demi-image (FD) placés en aval du diviseur pour mémoriser les valeurs moyennes des points-image, lesquels, sous le contrôle d'un circuit de commande (CON), lisent les valeurs moyennes des points-image mémorisés temporairement dans le format d'interlignage avec une fréquence de trame doublée, en ce sens que chaque seconde ligne sort retardée temporairement d'une quantité correspondant à la durée de demi-image de la demi-image de sortie en interlignage.

**5.** Dispositif selon la revendication 4, caractérisé en ce que les valeurs moyennes des points-image traversent un filtre d'alignement de crête vertical entre le diviseur (DIV) et le moyen de mémorisation de demi-image (FD).

Fig.1

Fig.2

Fig.3